# EUROPÄISCHE PATENTSCHRIFT

(11) **EP 3 126 143 B1**
(45) Veröffentlichungstag und Bekanntmachung des Hinweises auf die Patenterteilung: **28.02.2018**
(21) Anmeldenummer: 15713309.1
(22) Anmeldetag: 25.03.2015
(51) Int. Cl.: B32B 29/00, B32B 29/06, B32B 37/10, B32B 3/30, B44C 5/04

(54) **SCHICHTSTOFF UND VERFAHREN ZU DESSEN HERSTELLUNG**
LAMINATE AND METHOD FOR THE PRODUCTION THEREOF
MATÉRIAU STRATIFIÉ ET PROCÉDÉ POUR LE FABRIQUER

(30) Priorität: 03.04.2014 DE 102014104759
(43) Veröffentlichungstag der Anmeldung: 08.02.2017
(73) Patentinhaber: Fritz Egger GmbH & Co. OG, 6380 St. Johann in Tirol (AT)
(72) Erfinder: SCHIEGL, Walter, A-6380 St. Johann in Tirol (AT)
(74) Vertreter: Cohausz & Florack
(86) Internationale Anmeldenummer: PCT/EP2015/056432
(87) Internationale Veröffentlichungsnummer: WO 2015/150191

(56) Entgegenhaltungen:
- EP-A1- 0 081 147
- WO-A1-2011/076916
- US-A- 3 738 900
- US-A- 4 062 992
- US-A- 4 140 837
- US-A1- 2006 062 955

## Beschreibung

Die Erfindung betrifft Schichtstoff zum Aufbringen auf einem Trägermaterial, insbesondere auf eine Trägerplatte, mit einer harzimprägnierten Dekorschicht, mit mindestens einer harzimprägnierten Kernschicht und mit einer der Dekorschicht gegenüberliegend angeordneten harzimprägnierten Dekorschicht, wobei die Dekorschichten und die mindestens eine Kernschicht geeignet sind, um unter hohem Druck und Wärme miteinander verpresst zu werden. Die Erfindung betrifft auch ein Verfahren zur Herstellung eines Schichtstoffs.

Aus dem Stand der Technik bekannte Schichtstoffe sind ein vielseitig einsetzbarer Werkstoff, der in Kombination mit Holzwerkstoffen oder anderen Trägermaterialien, zu so genannten Verbundelementen verarbeitet wird. Die Anwendungen sind vielfältig und erfordern den Einsatz verschiedener Schichtstoffqualitäten, die auf die späteren Einsatzgebiete abzustimmen sind. Klassische Anwendungen bzw. Einsatzbereiche sind z.B. Küchenindustrie, Türenindustrie, Büromöbelindustrie, Messebau, Ladenbau, dekorativer Innenausbau, Fußböden, Schiffsbau und Fahrzeugbau. Unter Schichtstoffen werden somit dekorative Schichtstoffe verstanden, die unterschiedlichen Anforderungen genügen können. So gibt es bspw. Schichtstoffe in Standard-Qualität, nachformbare dekorative Schichtstoffe, die bei höheren Temperaturen auch geformt werden können, oder dekorative Schichtstoffe mit verbessertem Brandverhalten.

Die Schichtstoffe sind dekorative Schichtstoffe auf Basis härtbarer Harze. Sie sind mehrschichtig aufgebaut und bestehen bspw. zumindest aus einem melaminharzimprägnierten Dekorpapier als Dekorschicht und einem oder mehreren mit Phenolharz imprägnierten Natronkraftpapieren als Kernschichten, die unter hohem Druck und Wärme miteinander verpresst werden. Der Schichtstoffaufbau, Harz- und Papierqualitäten, Oberflächenstrukturen, die Verwendung spezieller Overlays (Schutzschichten) sowie die Pressparameter bei der Herstellung entscheiden über die Schichtstoffqualität und somit über die spätere Anwendung bzw. das Einsatzgebiet.

Die dekorative Seite des Schichtstoffes, die Dekorschicht, kann aus Dekorpapier bestehen, das als Holzdekor oder Fantasiedekor bedruckt wird, oder aus Uni- oder Weißdekoren, die bspw. als Kunststoffschichten ausgebildet sind. Die Flächengewichte der Dekorpapiere liegen in der Regel zwischen 50 -160 g/m².

Ein wesentlicher Bestandteil von Schichtstoffen können Kernpapiere, bspw. Natronkraftpapiere sein, die auch als Kernschichten oder Kernlagen bezeichnet werden. Das Flächengewicht der Kernpapiere bzw. Natronkraftpapiere liegt im Bereich von 70 - 300 g/m², wobei hohe Grammaturen vorwiegend für Kompaktplatten verwendet werden.

Ein Overlay ist ein gebleichtes, transparentes Papier mit hohem Harzaufnahmevermögen und wird zum Schutz des Dekors, insbesondere des Druckbildes von bedruckten Dekorpapieren und zur Verbesserung der Abriebbeständigkeit eingesetzt.

Ein Underlay oder Barrierepapier ist eine Papierlage zwischen Dekor- und Kernpapier bzw. Natronkraftpapier, das zur Verhinderung chemischer Beeinflussung zwischen den Harzen oder zur Erzielung optischer Effekte verwendet wird.

Melamin-Formaldehyd-Harze ergeben transparente und harte Beschichtungen und sind daher bestens als Oberflächenschicht von dekorativen Schichtstoffen geeignet. Zur Imprägnierung der Kernlagen werden, nicht zuletzt aus Kostengründen, relativ elastische Phenol-Formaldehyd-Harze eingesetzt.

Dekorative Schichtstoffe können also aus Zellulosefaserbahnen bzw. Papier, die mit wärmehärtenden Harzen imprägniert sind, bestehen. Andere natürliche oder künstliche Materialien können ebenfalls als Trägermaterial für den Harz eingesetzt werden. So sind Schichtstoffe aus mit Harz imprägnierten Glasfaservliesen ebenfalls bekannt. Die Schichten, vorzugsweise die Papierschichten werden mit den nachfolgend beschriebenen Herstellverfahren miteinander zum Schichtstoff verbunden. Die Zufuhr von Wärme und Druck bewirkt dabei ein Fließen und anschließendes Aushärten der Harze. Durch die Vernetzung der Harze, vorzugsweise verstärkt durch die Zellulosefasern der Papiere, entsteht ein sehr dichtes Material mit geschlossener Oberfläche. Dabei können einzelne Papierschichten, auch eine äußere Papierschicht, vor dem Verpressen unbeharzt sein, da beim Verpressen der Harz auch zuvor unbeharzte Schichten durchdringt.

Zu Beginn des Verfahrens werden die Schichten des Schichtaufbaus übereinander gelegt und anschließend zwischen zwei Pressmittel in Form von Presseblechen oder Pressbändern gebracht. Diese Pressmittel sind auf eine vorgegebene Temperatur aufgeheizt, so dass während des Pressvorgangs nicht nur ein ausreichender Druck sondern auch die benötigte Temperatur auf die Schichten aufgebracht wird. Das Hochdruckverfahren ist also durch die gleichzeitige Anwendung von Wärme (Temperatur ≥ 120 °C) und einem hohen Druck (≥ 25 bar) bestimmt, damit die wärmehärtbaren Harze fließen und anschließend aushärten, um einen homogenen, nicht porösen Werkstoff mit erhöhter Dichte (≥ 1,35 g/cm³) und der geforderten Oberflächenbeschaffenheit herzustellen.

Die zuvor genannten Pressmittel weisen in der Regel eine sehr glatte Oberfläche auf, um eine entsprechend glatte und somit glänzende Oberfläche des Schichtstoffs zu erreichen. Ebenso ist bekannt, das auf der Seite der Dekorschicht anliegende Pressmittel mit einer makroskopischen Struktur zu versehen, um eine sichtbare, möglicherweise mit dem Dekor synchron verlaufende Oberflächenstruktur auf dem Dekor zu erzielen. Dieses führt zusammen mit dem Dekor zu einer verbesserten naturnahen Oberflächenerscheinung.

Als Herstellverfahren sind CPL-Verfahren, CPL ist die Abkürzung für Continuous Pressed Laminates, und HPL-Verfahren, HPL ist die Abkürzung für High Pressure Laminates, bekannt.

CPL wird in kontinuierlich arbeitenden Doppelbandpressen mit einem Pressdruck zwischen 25 und 50 bar und Temperaturen zwischen 150 °C und 170 °C hergestellt. Abhängig von der Schichtstoffdicke und der Presszonenlänge variiert die Vorschubgeschwindigkeit zwischen 8 und 30 m/min.

HPL wird in diskontinuierlich arbeitenden Mehretagenpressen mit einem Pressdruck zwischen 70 und 80 bar und Temperaturen von über 120 °C hergestellt. Die Etagenpressen können bis zu 45 Etagen haben und jede Etage wird mit bis zu 24 Schichtstofflagen (Dicke ca. 0,50 bis 1,90 mm) gefüllt. Abhängig von der Pressenbeschickung und der maximalen Temperatur dauert der komplette Presszyklus inkl. einer optionalen Rückkühlung etwa 100 Minuten.

Die Längen- und Breitenformatierung von HPL erfolgt in gesonderten Arbeitsschritten. CPL hingegen kann direkt online nach der Presse sowohl in der Breite geschnitten und /oder auf Länge formatiert oder auf Rolle gewickelt werden.

Nach der Herstellung des Schichtstoffes wird dieser, meistens in einem separaten Verfahrensschritt und mit zeitlicher Verzögerung, mit einem Trägermaterial bzw. einer Trägerplatte verklebt. Um Schichtstoffe mit einer Trägerplatte besser verkleben zu können, werden deren Rückseiten geschliffen. Durch den Schliff wird eine Oberflächenstruktur geschaffen, die gut benetzbar ist. Nachteilig am Abschleifen der Rückseite ist jedoch, dass der Schichtstoff dadurch unsymmetrisch wird und dazu neigt, sich zu wölben. Daher müssen recht umfangreiche Lager- und Manipulationsmaßnahmen und besondere Vorkehrungen getroffen werden. Zusätzlich wird auch die Verarbeitung dadurch wesentlich erschwert.

Zudem führt das Schleifen zu einem zumindest teilweisen, vorzugsweise nahezu vollständigem Abtragen der obersten Harzschicht, so dass die darunter angeordnete Papierschicht zumindest teilweise freigelegt wird. Die Oberflächenspannung wird also verringert und die Benetzbarkeit der Oberfläche verändert sich. Feuchtigkeit kann daher während einer Lagerung in den Schichtstoff eindringen, bevor der Klebstoff kurz vor der Verarbeitung aufgetragen werden kann. Außerdem kann der Klebstoff zumindest teilweise zu tief in den Schichtaufbau eindringen, so dass für das Verkleben mit der Trägerplatte mehr Klebstoff als notwendig eingesetzt werden muss.

Ein weiterer Nachteil liegt darin, dass für jedes Dekor ein separater Vorrat an Schichtstoffen für das Verkleben mit einer Trägerplatte vorgehalten werden muss. Denn die Dekorseite und die zum Verkleben mit einer Trägerplatte vorgesehene Seite des Schichtstoffes sind bisher so unterschiedlich ausgebildet, dass für jedes Dekor ein separater Schichtstoff hergestellt werden muss.

Schichtstoffe für ein Verkleben mit einer Trägerplatte weisen somit herkömmlich eine dekorative Vorderseite und eine für ihre Verklebung mit einer Trägerplatte vorbereitete Rückseite auf. Zumeist besteht diese Rückseite aus einem nicht imprägnierten Papier, insbesondere Pergamentpapier, das geschliffen ist. Darüber hinaus sind aus dem Stand der Technik Kompaktplatten bekannt, die ähnlich einem Schichtstoff aufgebaut sind. Im Unterschied zu den vorgenannten Schichtstoffen weisen die Kompaktplatten keine Vorder- und Rückseite sondern zwei dekorativ ausgestaltete Oberflächen auf. Diese werden aber mit einer Dicke von größer oder gleich 2 mm nicht zur Verklebung mit einem Trägerwerkstoff, sondern als eigenständig formfeste Plattenwerkstoffe eingesetzt.

Die US 4,062,992 und die US 4,140,837 offenbaren eine Laminatkomponente bestehend aus einer imprägnierten Papierschicht, die mit trockenem Klebstoff-Beschichtungsmaterial versehen ist, in das flockige Fasern eingebettet sind. Die US 2006/062955 gibt einen Schichtstoff mit beidseitiger Dekorschicht an.

Der vorliegenden Erfindung liegt daher das technische Problem zugrunde, einen Schichtstoff zum Aufbringen auf einem Trägermaterial, insbesondere auf eine Trägerplatte, und ein Verfahren zur Herstellung eines Schichtstoffs derart auszugestalten und weiterzubilden, dass die zuvor genannten Nachteile behoben werden.

Das zuvor aufgezeigte technische Problem wird erfindungsgemäß durch einen Schichtstoff dadurch gelöst, dass die Oberfläche mindestens einer der, vorzugsweise beider Dekorschichten mit einer geprägten Struktur versehen ist, die einer durch Schleifen hergestellten Struktur entspricht, und dass ein Leitungswassertropfen bei Raumtemperatur mit einem maximalen Durchmesser von 15 mm mit der die geprägte Struktur aufweisenden Schicht einen Kontaktwinkel oberhalb von 40°, insbesondere oberhalb von 50° annimmt.

Somit werden doppelseitig dekorative Schichtstoffe zum Aufbringen auf einem Trägermaterial, insbesondere auf eine Trägerplatte, vorgeschlagen, die wahlweise mit der einen oder anderen Dekroschicht auf dem Trägermaterial aufgebracht werden können. Somit können beide Oberflächen dekorativ eingesetzt werden und gleichzeitig die Eigenschaften wie insbesondere Härte, Abrieb- und Kratzbeständigkeit und/oder Stoßfestigkeit aufweisen. Dieses führt zu einer Reduzierung der Lagerhaltung, da auf gleicher Fläche bzw. bei nahezu gleicher Kapitalbindung zwei Artikel statt einem vorgehalten werden können.

Ein erfindungsgemäßer Schichtstoff weist vorzugsweise eine Dicke des Stapels aus Dekorschicht, der mindestens einen Kernschicht und der weiteren Dekorschicht nach dem Verpressen auf, die weniger als 2 mm, vorzugsweise weniger als 1,5 mm beträgt. Somit werden erstmals beidseitig mit Dekorschichten versehene Schichtstoffe mit einer solch geringen Dicke vorgeschlagen.

In bevorzugter Weise weisen beide Dekorschichten unterschiedliche optische Dekore, also einfarbige Flächen oder mehrfarbige Muster auf. Ebenso können zusätzlich oder alternativ beide Dekorschichten eine unterschiedliche makroskopische Struktur, insbesondere eine zum optischen Dekor synchrone Struktur aufweisen. Unter einer makroskopischen Struktur wird dabei eine Oberflächenstruktur verstanden, die unter normalen Sichtbedingungen eines Benutzers zu einer sichtbaren Oberflächenstruktur führt. Dazu zählen bspw. die Struktur einer Holzmaserung oder die unterschiedliche Rauigkeit einer Fliesenoberfläche, die mit dem Schichtstoff nachgebildet werden soll.

Zudem kann mindestens eine der Dekorschichten mit einem Overlaypapier belegt sein, die einem Schutz der darunter befindlichen Dekorschicht dient. Vorzugsweise kann die Overlayschicht auch mit harten Partikeln wie Korund oder ähnlichen Substanzen versehen sein.

Neben einem unterschiedlichen optischem Dekor an Vorder- und Rückseite kann wie erwähnt auch eine unterschiedliche Struktur vorgesehen sein. Ebenso kann beidseitig das gleiche Dekor aber mit unterschiedlicher Strukturierung, insbesondere mit unterschiedlichen Synchronstrukturen vorgesehen werden. Wiederum können diese auf beiden Seiten bei gleichem oder unterschiedlichem Dekor vorgesehen sein.

Die erfindungsgemäßen Schichtstoffe neigen durch den symmetrischen Aufbau nicht zu einem Wölben oder Durchbiegen, bspw. also nicht zum sogenannten Schüsseln. In der Folge können dann aufwändige Maßnahmen bei der Lagerhaltung und der Weiterverarbeitung entfallen, die ansonsten bei einseitig geschliffenen Schichtstoffen notwendig sind. Beidseitige Schichtstoffe sind deshalb auch besonders gut zur Bemusterung von Dekoren geeignet. Abschnitte von beidseitigen Schichtstoffen können in Mustermappen bereitgestellt werden, da sie einerseits plan sind und andererseits beim Gewicht eines herkömmlichen Musters gleich zwei Dekore zeigen. Bislang waren Dekore im Original entweder nur als sehr kleine Abschnitte, bei denen die Ebenflächigkeit keine große Rolle gespielt hat, in Dekormappen enthalten. Oder die Dekore wurden in dickerer Ausführung mit verbesserter Planlage, dafür aber auch mit entsprechend erhöhtem Gewicht in den Mustermappen verwendet.

Damit die Dekorschichten jeweils eine für ein Verkleben mit einem Träger geeigneten Oberfläche aufweisen, wird mindestens eine der Dekorschichten mit einer geprägten Struktur versehen, die im Wesentlichen einer durch Schleifen hergestellten Struktur entspricht. Vorzugsweise werden beide Dekorschichten mit einer solchen geprägten Struktur versehen.

Somit wird auf der mindestens einen Dekorschicht eine Oberfläche erreicht, die ähnlich einer geschliffenen Oberfläche gut verklebt werden kann, ohne dass es durch den Vorgang des mechanischen Schleifens der Oberfläche zu einer unregelmäßigen Oberfläche oder zu einer Asymmetrie des Schichtaufbaus kommt. Unter einer Struktur, die im Wesentlichen einer durch Schleifen hergestellten Struktur entspricht, wird im Rahmen dieser Erfindung eine Struktur verstanden, deren Dimensionen vergleichbar mit den Dimensionen einer durch mechanisches Schleifen erzeugten Struktur sind.

Durch das Einprägen der Struktur während der Herstellung des Schichtstoffs wird die oberste Harzschicht moduliert und bleibt als durchgängige und somit versiegelnde Schicht bestehen, so dass trotz des Einbringens der Struktur in der Oberfläche während einer anschließenden Lagerung keine Feuchtigkeit in den Schichtstoff eindringen kann. Der für das Verarbeiten des Schichtstoffs notwendige Klebstoff kann daher in einer geringeren Menge aufgetragen werden, als bei einer oben beschriebenen geschliffenen Oberfläche mit geringer Oberflächenspannung. Dabei müssen keine Qualitätseinbußen bei der Verarbeitung während des Aufklebens auf der Trägerplatte hingenommen werden.

Als Maß und somit als Unterscheidungsmerkmal für die Beschaffenheit der Oberfläche des geprägten Schichtstoffs gegenüber einem geschliffenen Schichtstoff kann die Benetzbarkeit herangezogen werden. Die Benetzbarkeit hängt von der Oberflächenspannung der Oberfläche ab, wobei als Maß der sogenannte Kontaktwinkel gemessen werden kann. Die Größe des Kontaktwinkels zwischen Flüssigkeit und Oberfläche hängt von der Wechselwirkung zwischen der Flüssigkeit und der Oberfläche an der Berührungsfläche ab. Je geringer diese Wechselwirkung ist, desto größer wird der Kontaktwinkel. Aus der Bestimmung des Kontaktwinkels kann somit ein Maß für die Benetzbarkeit bestimmt werden.

Tatsächlich geschliffene Oberflächen, wie sie oben als Stand der Technik beschrieben worden sind, weisen eine geringe Oberflächenspannung und somit eine gute Benetzbarkeit auf. Bei Aufbringen eines Leitungswassertropfens bei Raumtemperatur mit einem maximalen Durchmesser von 15 mm nimmt der Kontaktwinkel einen geringen Wert im Bereich kleiner 20° oder kleiner 10° an. Bei einer geprägten Oberfläche liegt der Kontaktwinkel eines gleichen Wassertropfens oberhalb von 40°, insbesondere oberhalb von 50°. Zur Durchführung der Messung des Kontaktwinkels und zur Charakterisierung der spezifischen Eigenschaften des Leitungswassers wird auf die spezielle Beschreibung verwiesen.

Ein weiteres Unterscheidungsmerkmal zwischen einem Schichtstoff mit einer geprägten Struktur und einer tatsächlich geschliffenen Schichtstoffoberfläche besteht darin, ob und wie stark Wasser in durch die Oberfläche in den Schichtstoff eindringt. Bei einer geprägten Oberfläche perlt ein aufliegender Wassertropfen ab und das Wasser dringt nicht bzw. nur unmerklich in den Schichtstoff ein, weil die oberste beharzte Schicht eine eingeprägte Struktur aufweist, so dass die beharzte Schicht als solche mit Struktur durchgängig erhalten bleibt. Bei einer geschliffenen Oberfläche eines Schichtstoffes, dessen äußere Schicht aus einem mit Harz imprägnierten, aber an sich wasserabsorbierenden Material, wie beispielweise Papier, besteht, dringt das Wasser des aufliegenden Wassertropfens durch die geschliffene Oberfläche in den Schichtstoff ein. Denn durch das Schleifen der Oberfläche wird die durchgängige Harzschicht verletzt und abschnittweise vollständig entfernt, so dass die wasserabsorbierende Schicht freiliegt. Im Bereich um den Wassertropfen herum entstehen dadurch gut sichtbare nasse Bereiche des Schichtstoffes.

Bei einer bevorzugten Ausgestaltung des Schichtstoffs entspricht die geprägte Struktur in Tiefe und/oder Geometrie einer durch Schleifen hergestellten Struktur, wobei vorzugsweise die Tiefe der geprägten Struktur eine mittlere Rauigkeit von kleiner als 20 µm, insbesondere kleiner 10 µm aufweist und/oder wobei die Geometrie der geprägten Struktur einer Schleifriefen-Struktur, insbesondere aus parallel gerichteten Riefen, entspricht.

Somit sind auch Strukturen umfasst, die zwar eine Rauigkeit von weniger als 20 µm aufweisen, die jedoch nicht in Form von Riefen, sondern in davon unterschiedlichen geometrischen, vorzugsweise runden oder polygonen Formen ausgebildet sind. Ebenso sind damit Strukturen gemeint, die zwar eine Geometrie entsprechend einer Schleifriefen-Struktur aufweisen, deren Rauigkeit jedoch zumindest teilweise größer als 20 µm ist. Bevorzugt ist jedoch eine Kombination beider Merkmale.

Erfindungsgemäß ist die der als Dekorpapier ausgebildeten Dekorschicht gegenüberliegend angeordnete Dekorschicht als ein in seinen Eigenschaften im Wesentlichen dem Dekorpapier entsprechenden Dekorpapier ausgebildet. Dadurch kann ein Wölben oder Verformen des Schichtstoffes aufgrund unterschiedlicher mechanischer Spannungen verringert oder gar vermieden werden. In bevorzugter Weise ist die dem Dekorpapier gegenüberliegend angeordnete Schicht mit einem Harz imprägniert, das in seinem Zugverhalten dem Harz entspricht, das für die Imprägnierung des Dekorpapiers angewendet wird, das vorzugsweise vom gleichen Typ ist.

Alternativ zum Einprägen einer Struktur in mindestens eine der Dekorschichten kann mindestens eine der Dekorschichten mit einer Oberfläche versehen sein, die mittels eines Primers für ein Verkleben mit dem Trägermaterial vorbehandelbar ist. Als Primer kommen an sich bekannte chemische Substanzen in Frage, die dazu geeignet sind, die Oberflächenbeschaffenheit so zu verändern, dass eine bessere Benetzbarkeit der Oberfläche mit einem Harz oder einem anderen Klebstoff erreicht wird.

Ebenso kann mindestens eine der Dekorschichten mit einer Oberfläche versehen sein, die mittels einer Koronabehandlung oder einer atmosphärischen Plasmabehandlung vorbehandelbar ist. Derartige Oberflächen kommen ohne die Anwendung eines Primers aus und erhalten durch die genannten Vorbehandlungen eine verbesserte Benetzbarkeit.

Die zuvor erläuterten Schichten sind vorzugsweise, wie oben erläutert, aus Papierschichten, also Dekorpapier, Kraftpapier als Kernschichten, Gegenzugpapier oder Overlaypapier. Jedoch ist die Erfindung nicht auf die Anwendung verschiedener Papierschichten begrenzt. So können bspw. auch Kunststoffschichten oder Materialien aus natürlichen Stoffen, vorzugsweise aus Holz oder Gewebe, zumindest teilweise zum Aufbau des Schichtstoffes beitragen. Ebenso kommen Glasfaservliese in Frage.

Das oben aufgezeigte technische Problem wird auch durch ein Verfahren zur Herstellung eines Schichtstoffs zum Aufbringen auf einem Trägermaterial, insbesondere auf eine Trägerplatte gelöst, bei dem eine harzimprägnierte Dekorschicht, mindestens eine harzimprägnierte Kernschicht und eine weitere harzimprägnierte Dekorschicht aufeinander geschichtet werden, bei dem die Dekorschicht, die mindestens eine Kernschicht und die weitere Dekorschicht unter hohem Druck und Wärme miteinander verpresst werden, bei dem die Oberfläche mindestens einer der, vorzugsweise beider Dekorschichten mit einer geprägten Struktur so versehen, dass ein Leitungswassertropfen bei Raumtemperatur mit einem maximalen Durchmesser von 15 mm mit der die geprägte Struktur aufweisenden Schicht einen Kontaktwinkel oberhalb von 40°, insbesondere oberhalb von 50° annimmt.

In einer vorteilhaften Ausgestaltung des Verfahrens wird mindestens eine der Dekorschichten mit einem Pressmittel mit einer Struktur verpresst und geprägt, wobei die Struktur im Wesentlichen einer durch Schleifen hergestellten Struktur entspricht. Die Struktur kann auch auf beiden Dekorschichten eingeprägt werden. Zusätzlich zu dieser im Wesentlichen einer durch Schleifen hergestellten Struktur entsprechenden Struktur, die auch als Mikrostruktur bezeichnet werden kann, kann auch die oben erwähnte Makrostruktur eingepresst werden. Somit wird die Makrostruktur von der Mikrostruktur auf der Oberfläche der Dekörschicht überlagert.

Weitere Eigenschaften und Vorteile des erfindungsgemäßen Verfahrens ergeben sich aus den zuvor erläuterten Eigenschaften des doppelseitigen Schichtstoffs, der mit dem erfindungsgemäßen Verfahren hergestellt werden kann.

Die Erfindung wird im Folgenden anhand von Ausführungsbeispielen näher erläutert, wobei auf die beigefügte Zeichnung Bezug genommen wird. In der Zeichnung zeigen
- Fig. 1: einen Aufbau eines Schichtstoffes vor dem Verpressen,
- Fig. 2: einen fertigen Schichtstoff vor dem Verpressen mit einer Trägerplatte,
- Fig. 3: eine schematische Darstellung einer Bandpresse zur Herstellung eines Schichtstoffes und
- Fig. 4: eine schematische Darstellung einer Taktpresse zur Herstellung eines Schichtstoffes
- Fig. 5: ein Prinzipschaubild zur Erläuterung des Begriffs Kontaktwinkel,
- Fig. 6: eine schematische Darstellung eines Wassertropfens auf der Oberfläche eines geprägten Schichtstoffs in einer schrägen Draufsicht,
- Fig. 7: eine schematische Darstellung eines Wassertropfens auf der Oberfläche eines geprägten Schichtstoffs in einer Seitenansicht zur Bestimmung des Kontaktwinkels,
- Fig. 8: eine schematische Darstellung eines Wassertropfens auf einer geschliffenen Oberfläche eines Schichtstoffs (Stand der Technik) in einer schrägen Draufsicht und
- Fig. 9: eine schematische Darstellung eines Wassertropfens auf einer geschliffenen Oberfläche eines Schichtstoffs (Stand der Technik) in einer Seitenansicht zur Bestimmung des Kontaktwinkels.

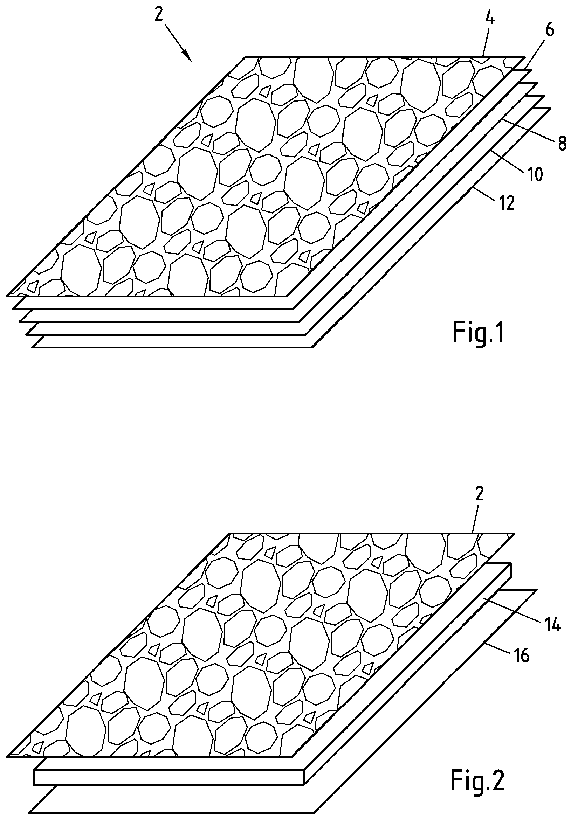

Fig. 1 zeigt einen Schichtaufbau eines Schichtstoffes 2 zum Aufbringen auf einem Trägermaterial, insbesondere auf eine Trägerplatte, vor dem Verpressen. Der Schichtstoff 2 weist ein harzimprägniertes Dekorpapier 4 als Dekorschicht und drei harzimprägnierte Kraftpapieren 6, 8, und 10 als Kernschichten auf. Das Dekorpapier 4 und die Kernpapiere 6, 8 und 10 sind geeignet, um unter hohem Druck und Wärme miteinander verpresst zu werden. Dadurch wird der gewünschte Schichtstoff 2 hergestellt. Das Dekorpapier 4 weist auf der Oberseite ein optisches Muster als Dekor auf. Anstelle des bedruckten Dekorpapiers 4 kann auch ein einfarbiges Dekorpapier verwendet werden. Die Darstellung in Fig. 1 zeigt den Aufbau des Schichtstoffes 2 vor dem Verpressen.

Erfindungsgemäß weist der Schichtstoff 2 eine der Dekorschicht 4 gegenüberliegend angeordnete Schicht 12 auf, die ebenfalls als Dekorschicht ausgebildet ist. Die Dekorschichten 4 und 12 sind jeweils mit einer für ein Verkleben mit einem Trägermaterial geeigneten Oberfläche versehen.

Gleichzeitig dient die Dekorschicht 12 als Gegenzugschicht zur oberen Dekorschicht 4. Um ein Verziehen eines solcherart aufgebauten Schichtstoffes weiter zu minimieren, sind beide Dekorschichten 4 und 12 mit einem gleichen Harz imprägniert, so dass sich ein gleiches Zugverhalten beider Dekorschichten 4 und 12 ergibt. Vorzugsweise wird dasselbe Harz, insbesondere Melaminharz verwendet.

Bei dem in Fig. 1 dargestellten Ausführungsbeispiel weisen beide Dekorschichten 4 und 12 unterschiedliche optische Dekore auf, so weist die obere Dekorschicht 4 eine dunkle Farbe auf, während die untere Dekorschicht 12 eine helle Farbe hat.

Darüber hinaus können beide Dekorschichten 4 und 12 eine unterschiedliche makroskopische Struktur, insbesondere eine zum optischen Dekor synchrone Struktur aufweisen. Dieses ist nicht im Detail dargestellt.

Der Schichtaufbau nach Fig.1 ist weiterhin dadurch gekennzeichnet, dass mindestens eine der Dekorschichten 4 und 12 während des Verpressens mit einer geprägten Struktur versehen wird, die im Wesentlichen einer durch Schleifen hergestellten Struktur entspricht. Die geprägte Struktur verleiht der Oberfläche der Schicht 10 eine vergrößerte Fläche, so dass das Verkleben mit einer Trägerplatte verbessert wird.

Die geprägte Struktur entspricht dabei vorzugsweise in Tiefe und/oder Geometrie einer durch Schleifen hergestellten Struktur. Dabei kommt es nicht auf identische Geometrien und/oder identische Topographien, also auf eine echte Kopie einer durch mechanisches Schleifen hergestellten Struktur an. Denn die erfindungsgemäße Wirkung der Oberfläche wird dann erreicht, wenn gleiche mechanische Dimensionierungen eingehalten werden. Denn diese Dimensionierungen sind maßgeblich für die guten Klebeeigenschaften verantwortlich.

So wird bspw. die Tiefe der geprägten Struktur mit einer mittleren Rauigkeit von kleiner als 20 µm, insbesondere kleiner 10 µm gewählt, die auch bei einem typischen Schleifvorgang erzeugt wird. Gleichzeitig oder alternativ entspricht die Geometrie der geprägten Struktur einer Schleifriefen-Struktur, insbesondere aus parallel gerichteten Riefen.

Nachfolgend wird ein Beispiel für eine erfindungsgemäße Struktur in Form einer Tabelle angegeben, wobei die Struktur mit gängigen Parametern charakterisiert worden ist. Die Messung erfolgte mit einem flächenbasierten Verfahren zur 3D Oberflächenmessung gemäß EN ISO Standard 25178. Insbesondere ist dabei die Fokus-Variation als flächenbasiertes Messverfahren angewendet worden.

| **Name** | **Wert** | **[u]** | **Beschreibung** |
|---|---|---|---|
| Ra | 1.25 | µm | Mittlere Rauheit des Profils |
| Rq | 8.45 | µm | Quadratischer Mittelwert der Rauheit des Profils |
| Rt | 43.9 | µm | Gesamthöhe des Rauheitsprofil |
| Rz | 28.8 | µm | Gemittelte Höhe des Rauheitsprofil |
| Rmax | 34.0 | µm | Maximale Höhe des Rauheitsprofil innerhalb einer Einzelmessstrecke |
| Rp | 21.2 | µm | Höhe der größten Profilspitze des Rauheitsprofil |
| Rv | 22.7 | µm | Tiefe des größten Profil tales des Rauheitsprofil |
| Rc | 25.6 | µm | Mittlere Höhe der Profilunregelmäßigkeiten des Rauheitsprofil |
| Rsm | 364 | µm | Mittlerer Abstand der Profilunregelmäßigkeiten des Rauheitsprofil |

Neben einer eingeprägten Struktur in mindestens einer der Dekorschichten 4 und 12 kann mindestens eine der Dekorschichten 4 und 12 mit einer Oberfläche versehen sein, die mittels eines Primers für ein Verkleben mit dem Trägermaterial vorbehandelbar ist. Darüber hinaus kann mindestens eine der Dekorschichten 4 und 12 mit einer Oberfläche versehen sein, die mittels einer Koronabehandlung oder einer atmosphärischen Plasmabehandlung vorbehandelbar ist.

Fig. 2 zeigt einen erfindungsgemäß hergestellten Schichtstoff 2 im Stapel mit einer Trägerplatte 14 aus Holzwerkstoff, bspw. MDF-Platte (mitteldichte Faserplatte) oder HDF-Platte (hochdichte Faserplatte) und einer unterhalb der Trägerplatte 14 angeordneten Gegenzugschicht 16. Dieser Stapel wird dann in einer Presse unter Anwendung von Druck und Temperatur zu einer beschichteten Holzwerkstoffplatte weiter verarbeitet.

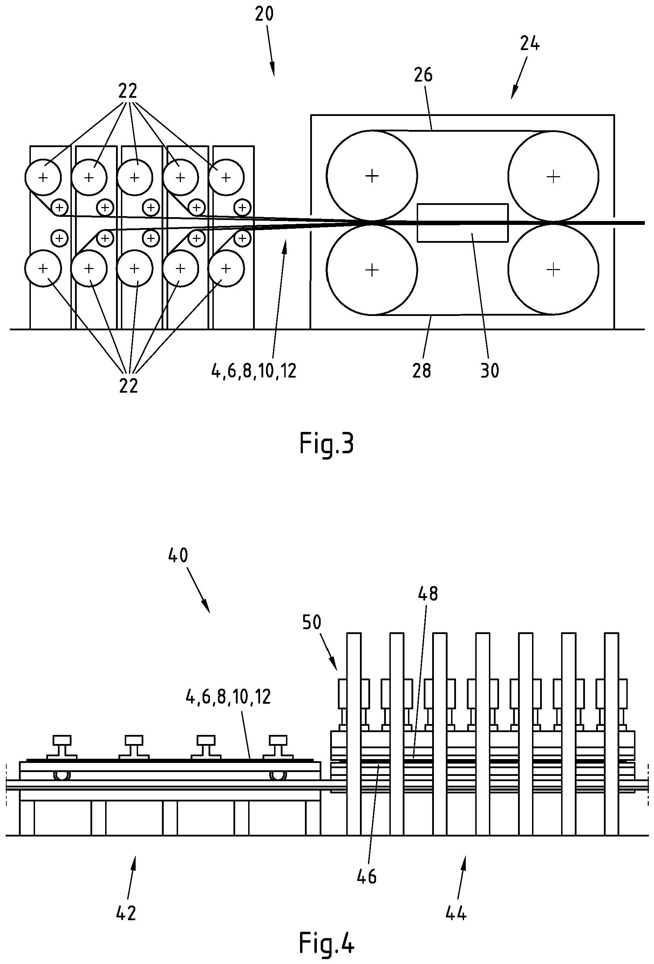

Fig. 3 zeigt eine Presse 20 zur Herstellung von Schichtstoffen, die nach dem CPL-Verfahren arbeitet. Im linken Bereich der Fig. 4 sind eine Mehrzahl von Rollen 22 dargestellt, auf die die blattförmigen Materialien der einzelnen Schichten 4 bis 12 - entsprechend dem Ausführungsbeispiel nach Fig. 1- des zu erzeugenden Schichtstoffs 2 aufgewickelt sind. Die Schichten 4 bis 12 werden kontinuierlich abgewickelt und einer Pressstation 24 zugeführt. Dort werden die Schichten 4 bis 12 zwischen zwei endlose umlaufende Pressbänder 26 und 28 eingeführt und für einen durch die Geschwindigkeit der Pressbänder 26 und 28 vorgegebenen Zeitraum unter hohen Druck gesetzt. Durch eine Heizstation 30 werden die Schichten gleichzeitig mit der Druckbeaufschlagung auf eine hohe Temperatur aufgeheizt. Am rechten Ende der Pressstation 24 verlässt dann der fertige Schichtstoff als kontinuierlicher Strang die Presse 20.

Das erfindungsgemäße Verfahren zur Herstellung eines Schichtstoffs kann mit der Presse 20 gemäß Fig. 3 durchgeführt werden. Die Presse 2 weist ein Pressmittel in Form eines unteren Pressbands 28 auf. Das Pressband 28 weist auf der der unteren Schicht 12 zugewandten Seite eine zuvor beschriebene Struktur auf, die während des Pressvorgangs in der Pressstation 24 in die untere Schicht 12 des zu bildenden Schichtstoffes eingeprägt wird. Dabei entspricht die Struktur des Pressbandes 28 im Wesentlichen einer durch Schleifen hergestellten Struktur, wie sie zuvor erläutert worden ist. Wenn beide Dekorschichten 4 und 12 mit einer beschriebenen Struktur versehen werden sollen, dann ist auch das obere Pressband 26 mit einer entsprechenden Struktur versehen. Damit entsteht ein Schichtstoff 2, der auf beiden Seiten eine Dekorschicht 4 bzw. 12 aufweist, der mit einer geprägten Struktur versehen ist, die im Wesentlichen einer durch Schleifen hergestellten Struktur entspricht.

Fig. 4 zeigt nun eine Presse 40 zur Herstellung von Schichtstoffen, die nach dem HPL-Verfahren arbeitet. Im linken Bereich der Fig. 4 ist eine Stapelvorrichtung 42 dargestellt, in der die mehreren Schichten 4 bis 12 des zu bildenden Schichtstoffs 2 gemäß dem Ausführungsbeispiel nach Fig. 1 aufeinander gestapelt werden. Dabei handelt es sich um zugeschnittene, also in ihrer Länge und Breite vorgegebene Blätter.

Mittels eines Lineartransportes werden die gestaffelten Schichten 4 bis 12 der rechts dargestellten Pressstation 44 zugeführt und zwischen einem unteren Pressblech 46 und einem oberen Pressblech 48 angeordnet. Mithilfe einer Mehrzahl von Druckzylindern 50 wird das obere Pressblech 48 abgesenkt, so dass die gestapelten Schichten 4 bis 12 unter einem hohen Druck zusammengepresst werden. Da zusätzlich die Pressbleche 46 und 48 vorgeheizt sind, wird zusätzlich zum Druck auch eine erhöhte Temperatur zugeführt. Nach einer vorgegebenen Zeitspanne wird die Pressstation 44 geöffnet und der fertig gestellte Schichtstoff entnommen.

Wahlweise sind entweder beide Pressbleche 46 und 48 oder nur eines der beiden Pressbleche 46 und 48 mit einer Struktur versehen, die im Wesentlichen einer durch Schleifen hergestellten Struktur entspricht, wie zuvor erläutert worden ist.

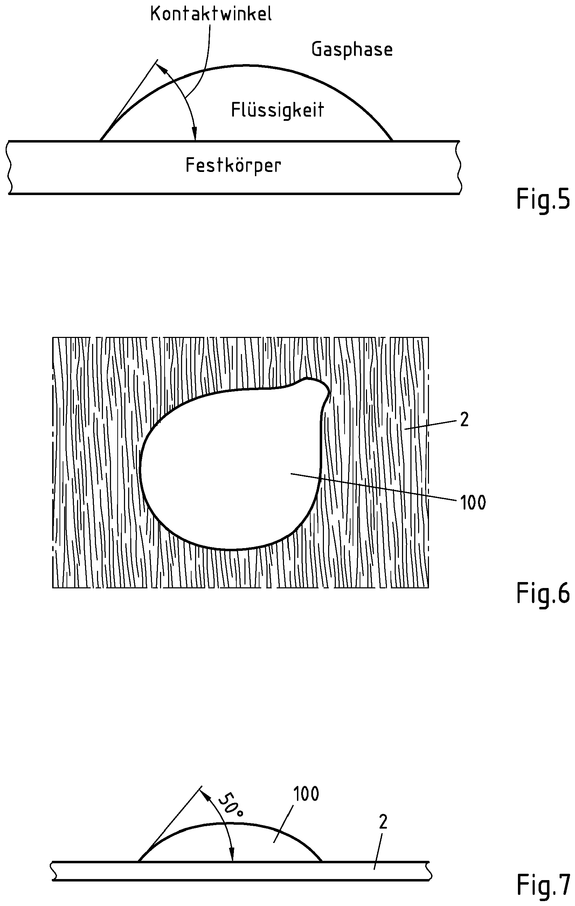

Fig. 5 zeigt ein Prinzipschaubild zur Erläuterung des Begriffs Kontaktwinkel. Auf der Oberfläche des Festkörpers liegt ein Tropfen aus einer Flüssigkeit, der von einer Gasphase, vorzugsweise Luft, umgeben ist. Durch die Oberflächenspannung der Flüssigkeit einerseits und die Oberflächenspannung der Oberfläche des Festkörpers andererseits bildet sich die dargestellte Tropfenform aus. An dem Dreiphasenpunkt, also dort wo die feste Phase, die flüssige Phase und die Gasphase nebeneinander vorliegen, bildet die Oberfläche der Tropfenform einen Winkel mit der Oberfläche des Festkörpers, der als Kontaktwinkel bezeichnet wird. Da die Oberflächenspannung der Flüssigkeit eine Rolle bei der Ausbildung der Tropfenform spielt, kommt es bei der Bestimmung des Kontaktwinkels auch auf die Größe der Fläche, die von der Flüssigkeit auf der Oberfläche des Festkörpers bedeckt wird, an. Daher werden die Flüssigkeit üblicher Weise so dosiert, dass eine vorgegebene Fläche nicht überschritten wird. Beispielsweise sollte bei der Verwendung von Wasser eine Fläche von mehr als 15 mm Durchmesser nicht überschritten werden.

Fig. 6 zeigt eine schematische Darstellung eines Wassertropfens 100 auf der Oberfläche eines geprägten Schichtstoffs 2 in einer schrägen Draufsicht. Der Wassertropfen 100 ist in seiner Kontur scharf abgrenzbar, die umgebenden Abschnitte der Oberfläche sind nicht benetzt und das darunter liegende Material des Schichtstoffs 2 hat keine Feuchtigkeit aufgenommen, was an der gleichmäßigen Färbung der Oberfläche zu erkennen ist.

In Fig. 7 ist eine schematische Darstellung eines Wassertropfens 100 auf der Oberfläche eines geprägten Schichtstoffs 2 in einer Seitenansicht zur Bestimmung des Kontaktwinkels dargestellt.

Zur Bestimmung des Kontaktwinkels kann beispielsweise die Tropfenkonturanalyse (Drop Shape Analysis, DSA) angewendet werden. Die Tropfenkonturanalyse ist eine Bildanalysemethode zur Bestimmung des Kontaktwinkels aus der Seitenansicht oder aus dem Schattenbild eines liegenden Tropfens auf der Oberfläche. Dazu wird ein Tropfen auf eine feste Oberfläche dosiert (liegender Tropfen). Mit Hilfe einer Kamera wird ein Bild des Tropfens aufgenommen.

Für eine grobe, meist schon ausreichende Analyse kann direkt im Bild der Winkel zwischen der Flüssigkeitsoberfläche und der Oberfläche des Schichtstoffs mit einem Lineal bestimmt werden. Vorliegend wurde in dieser Weise in Fig. 7 mit Hilfe eines Lineals der Kontaktwinkel zu 50° bestimmt.

Bei einer genaueren Analyse kann das Bild in eine Tropfenkonturanalyse-Software übertragen werden. Anhand einer Graustufenanalyse des Bildes wird zunächst eine Konturerkennung durchgeführt. Im zweiten Schritt wird mit einer mathematischen Methode ein die Tropfenkontur beschreibendes, geometrisches Modell an die Kontur gefittet. Der Kontaktwinkel ergibt sich dann aus dem Winkel zwischen der ermittelten Tropfenkontur-Funktion und der Probenoberfläche, deren Projektion im Tropfenbild als Basislinie bezeichnet wird.

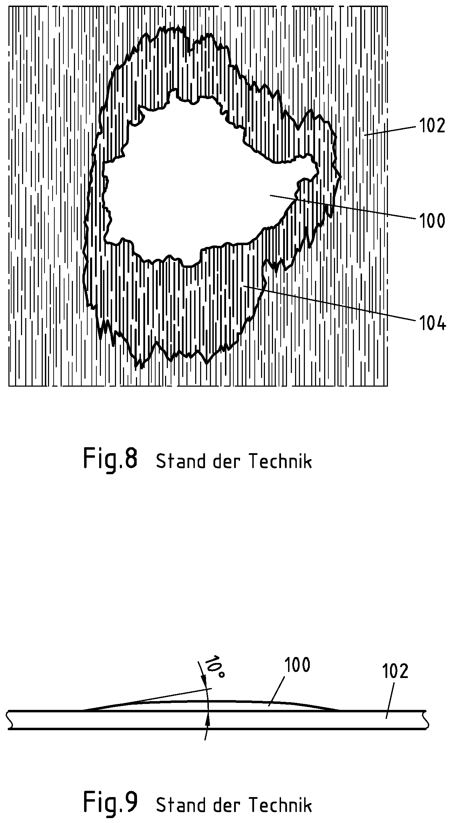

Fig. 8 zeigt eine schematische Darstellung eines Wassertropfens 100 auf einer geschliffenen Oberfläche eines Schichtstoffs 102 in einer schrägen Draufsicht, also auf einer Probe, wie sie aus dem Stand der Technik bekannt ist. Im Unterschied zu Fig. 6 ist der aufliegende Tropfen 100 nicht mehr scharf abgrenzbar und der Tropfen 100 hat eine flachere Form als in Fig. 6 dargestellt ist. Zudem sind die den Tropfen 100 umliegenden Abschnitte 104 der Oberfläche dadurch feucht geworden, dass ein Teil des Wassers des Tropfens 100 vom Schichtstoff 102 aufgenommen worden ist. Die Nässe zeigt sich durch die dunkle Verfärbung im Vergleich zu der deutlich helleren weiteren Umgebung der Oberfläche.

In Fig. 9 ist eine schematische Darstellung eines Wassertropfens auf einer geschliffenen Oberfläche eines Schichtstoffs 102 in einer Seitenansicht zur Bestimmung des Kontaktwinkels. Wie sich schon aus Fig. 8 ergibt, weist der Tropfen 100 eine flachere Form auf und der Kontaktwinkel wurde in der Photographie mit einem Lineal zu 10° bestimmt.

Für die dargestellten Versuche nach den Fig. 6 bis 9 wurde Leitungswasser mit den folgenden physikalischen und chemischen Eigenschaften verwendet:
- Wassertemperatur 20°C (Raumtemperatur)
- pH-Wert 7,5
- Elektrische Leitfähigkeit bei 25 °C: 709 µS/cm
- Karbonathärte: 11,0 °dH
- Gesamthärte:13,4 °dH mit einerErdalkalisumme von 2,4 mmol/l
- Nitrat NO₃-: 12 mg/l
- Nitrit NO₂-: < 0,02 mg/l
- Phosphat (gesamt): PO₄³⁻:1,2 mg/l
- Kieselsäure SiO₂: 8,8 mg/l
- Fluorid F-: 0,13 mg/l
- Chlorid Cl-: 74 mg/l
- Sulfat SO₄²⁻: 59 mg/l
- Hydrogencarbonat HCO₃-: 213 mg/l mg/l
- Natrium Na⁺: 35 mg/l
- Magnesium Mg²⁺: 11 mg/l
- Calcium Ca²+: 79 mg/l
- Kalium K⁺: 4 mg/l

Die Tropfengröße wurde so dosiert, dass der Tropfen eine Fläche mit einem Durchmesser von ca. 10 bis 15 mm, bei den geschliffenen Schichtstoffen nach Fig. 8 und 9 zu Beginn vor dem Zerfließen aufwies.

## Patentansprüche

1. Schichtstoff zum Aufbringen auf einem Trägermaterial, insbesondere auf eine Trägerplatte,
- mit einer harzimprägnierten Dekorschicht (4),
- mit mindestens einer harzimprägnierten Kernschicht (6, 8,10) und
- mit einer der Dekorschicht (4) gegenüberliegend angeordneten harzimprägnierten Dekorschicht (12).
- wobei die Dekorschichten (4,12) und die mindestens eine Kernschicht (6, 8, 10) miteinander verpresst sind,
**dadurch gekennzeichnet,**
- **dass** die Oberfläche mindestens einer der, vorzugsweise beider Dekorschichten (4, 12) mit einer geprägten Struktur versehen ist, die einer durch Schleifen hergestellten Struktur entspricht, und
- **dass** ein Leitungswassertropfen bei Raumtemperatur mit einem maximalen Durchmesser von 15 mm mit der die geprägte Struktur aufweisenden Schicht einen Kontaktwinkel oberhalb von 40°, insbesondere oberhalb von 50° annimmt.

2. Schichtstoff nach Anspruch 1,
**dadurch gekennzeichnet,**
**dass** die Dicke des Stapels aus Dekorschicht (4), der mindestens einen Kernschicht (6, 8,10) und der weiteren Dekorschicht (12) nach dem Verpressen weniger als 2 mm, vorzugsweise weniger als 1,5 mm beträgt.

3. Schichtstoff nach Anspruch 1 oder 2,
**dadurch gekennzeichnet,**
**dass** beide Dekorschichten (4, 12) unterschiedliche optische Dekore aufweisen.

4. Schichtstoff nach einem der Ansprüche 1 bis 3,
**dadurch gekennzeichnet,**
**dass** beide Dekorschichten (4,12) eine unterschiedliche makroskopische Struktur, insbesondere eine zum optischen Dekor synchrone Struktur aufweisen.

5. Schichtstoff nach einem der Ansprüche 1 bis 4,
**dadurch gekennzeichnet,**
**dass** die geprägte Struktur in Tiefe und/oder Geometrie einer durch Schleifen hergestellten Struktur entspricht.

6. Schichtstoff nach einem der Ansprüche 1 bis 5,
**dadurch gekennzeichnet,**
**dass** die Tiefe der geprägten Struktur eine mittlere Rauigkeit von kleiner als 20 µm, insbesondere kleiner 10 µm aufweist.

7. Schichtstoff nach einem der Ansprüche 1 bis 6,
**dadurch gekennzeichnet,**
**dass** die Geometrie der geprägten Struktur einer Schleifriefen-Struktur, insbesondere aus parallel gerichteten Riefen, entspricht.

8. Verfahren zur Herstellung eines Schichtstoffs zum Aufbringen auf einem Trägermaterial, insbesondere auf eine Trägerplatte, nach einem der Ansprüche 1 bis 7,
- bei dem eine harzimprägnierte Dekorschicht, mindestens eine harzimprägnierte Kernschicht und eine weitere harzimprägnierte Dekorschicht aufeinander geschichtet werden,
- bei dem die Dekorschicht, die mindestens eine Kernschicht und die weitere Dekorschicht unter Druck und Wärme miteinander verpresst werden,
- bei dem die Oberfläche mindestens einer der, vorzugsweise beider Dekorschichten mit einer geprägten Struktur, die einer durch Schleifen hergestellten Struktur entspricht, so versehen wird, dass ein Leitungswassertropfen bei Raumtemperatur mit einem maximalen Durchmesser von 15 mm mit der die geprägte Struktur aufweisenden Schicht einen Kontaktwinkel oberhalb von 40°, insbesondere oberhalb von 50° annimmt.

## Claims

1. Laminate for application on a carrier material, in particular on a carrier plate,
- with a resin-impregnated decorative layer (4),
- with at least one resin-impregnated core layer (6, 8, 10), and
- with a resin-impregnated decorative layer (12) arranged opposite to the decorative layer (4)
- wherein the decorative layers (4, 12) and the at least one core layer (6, 8, 10) are pressed together,
**characterised in that**
- the surface of at least one of the decorative layers (4, 12), preferably of both decorative layers (4, 12), is provided with an embossed structure which corresponds to a structure produced by grinding, and
- **in that** a tap-water drop at room temperature with a maximum diameter of 15 mm takes a contact angle of more than 40°, in particular more than 50°, with the layer that has the embossed structure.

2. Laminate according to Claim 1,
**characterised in that**
the thickness of the stack of the decorative layer (4), the at least one core layer (6, 8, 10) and the further decorative layer (12) after pressing is less than 2 mm, preferably less than 1.5 mm.

3. Laminate according to Claim 1 or 2,
**characterised in that**
the two decorative layers (4,12) have different visual decors.

4. Laminate according to any one of Claims 1 to 3,
**characterised in that**
the two decorative layers (4, 12) have a different macroscopic structure, in particular a structure synchronous with the optical decor.

5. Laminate according to any one of Claims 1 to 4,
**characterised in that**
the embossed structure corresponds in depth and/or geometry to a structure produced by grinding.

6. Laminate according to any one of Claims 1 to 5,
**characterised in that**
the depth of the embossed structure has an average roughness of less than 20 µm, in particular less than 10 µm.

7. Laminate according to any one of Claims 1 to 6,
**characterised in that**
the geometry of the embossed structure corresponds to a grinding-groove structure, in particular consisting of grooves oriented parallel to one another.

8. Method for producing a laminate for application on a carrier material, in particular on a carrier plate, according to any one of Claims 1 to 7,
- in which a resin-impregnated decorative layer, at least one resin-impregnated core layer and a further resin-impregnated decorative layer are layered on top of each other,
- in which the decorative layer, the at least one core layer and the further decorative layer are pressed together under pressure and heat,
- in which the surface of at least one of the decorative layers, preferably of both decorative layers, is provided with an embossed structure, which corresponds to a structure made by grinding, in such a way that a tap-water drop at room temperature with a maximum diameter of 15 mm takes a contact angle of more than 40°, in particular more than 50°, with the layer that has the embossed structure.

## Revendications

1. Matériau stratifié destiné à être appliqué sur un matériau support, en particulier sur un panneau support,
- comprenant une couche décorative (4) imprégnée de résine,
- comprenant au moins une couche formant l'âme centrale (6, 8, 10) et imprégnée de résine, et
- comprenant une couche décorative (12) imprégnée de résine et disposée en étant placée à l'opposé de la couche décorative (4),
- où les couches décoratives (4, 12) et la couche - au moins au nombre de un - formant l'âme centrale (6, 8, 10) sont comprimées l'une avec l'autre,
**caractérisé**
- **en ce que** la surface d'au moins l'une des couches, de préférence des deux couches décoratives (4, 12), est dotée d'une structure gaufrée qui correspond à une structure fabriquée par rectification réalisée par meulage, et
- **en ce qu'**une goutte d'eau de conduite, à température ambiante et ayant un diamètre maximum de 15 mm, forme, avec la couche présentant la structure gaufrée, un angle de contact supérieur à 40°, en particulier supérieur à 50°.

2. Matériau stratifié selon la revendication 1,
**caractérisé**
**en ce que** l'épaisseur de la pile formée par la couche décorative (4), par la couche - au moins au nombre de un - formant l'âme centrale (6, 8, 10) et par l'autre couche décorative (12), est égale, après le processus de compression, à moins de 2 mm, de préférence à moins de 1,5 mm.

3. Matériau stratifié selon la revendication 1 ou 2,
**caractérisé**
**en ce que** les deux couches décoratives (4, 12) présentent des décors optiques différents.

4. Matériau stratifié selon l'une quelconque des revendications 1 à 3,
**caractérisé**
**en ce que** les deux couches décoratives (4, 12) présentent une structure macroscopique différente, en particulier une structure synchrone par rapport au décor optique.

5. Matériau stratifié selon l'une quelconque des revendications 1 à 4,
**caractérisé**
**en ce que** la structure gaufrée correspond, en profondeur et/ou en géométrie, à une structure fabriquée par rectification réalisée par meulage.

6. Matériau stratifié selon l'une quelconque des revendications 1 à 5,
**caractérisé**
**en ce que** la profondeur de la structure gaufrée présente une rugosité moyenne inférieure à 20 µm, en particulier inférieure à 10 µm.

7. Matériau stratifié selon l'une quelconque des revendications 1 à 6,
**caractérisé**
**en ce que** la géométrie de la structure gaufrée correspond à une structure à stries de rectification réalisée par meulage, ladite structure se composant en particulier de stries orientées de façon parallèle.

8. Procédé de fabrication d'un matériau stratifié destiné à être appliqué sur un matériau support, en particulier sur un panneau support, selon l'une quelconque des revendications 1 à 7,
- procédé au cours duquel une couche décorative imprégnée de résine, au moins une couche formant l'âme centrale et imprégnée de résine, et une autre couche décorative imprégnée de résine, sont stratifiées les unes sur les autres,
- procédé au cours duquel la couche décorative, la couche - au moins au nombre de un - formant l'âme centrale, et l'autre couche décorative, sont comprimées les unes avec les autres, sous l'effet de la pression et la chaleur,
- procédé au cours duquel la surface d'au moins l'une des couches, de préférence des deux couches décoratives, est dotée d'une structure gaufrée qui correspond à une structure fabriquée par rectification réalisée par meulage, ladite surface étant dotée de manière telle, qu'une goutte d'eau de conduite, à température ambiante et ayant un diamètre maximum de 15 mm, forme, avec la couche présentant la structure gaufrée, un angle de contact supérieur à 40°, en particulier supérieur à 50°.
